# EUROPÄISCHE PATENTANMELDUNG

(11) **EP 0 716 968 A1**
(43) Veröffentlichungstag der Anmeldung: **19.06.1996**
(21) Anmeldenummer: 95117889.6
(22) Anmeldetag: 14.11.1995
(51) Int. Cl.: B60T 8/00

(54) **Bremsenkörper für Kraftfahrzeugbremsen**

(30) Priorität: 17.12.1994 DE 4445236
(71) Anmelder: Buderus Guss GmbH, D-35576 Wetzlar (DE)
(72) Erfinder: Müller, Hans-Walter, D-35644 Hohenahr (DE)

(57) **Zusammenfassung**

Bei Kraftfahrzeugbremsen mit ABS liefert ein ABS-Sensor die an einer Zahnscheibe (5) abgegriffenen Radialdrehzahlsignale für das Fahrwerkregelsystem. Damit die frei vorstehenden Kanten der angegossenen Zähne (6) nicht beschädigt werden, ist zumindest am freien Innenkranz ein umlaufender, die Zähne (6) begrenzender Bund (8) angeordnet. Alternativ ist es auch möglich, die frei vorstehenden Kanten mit einer diese Kanten brechenden Abschrägung zu versehen.

## Beschreibung

Die Erfindung betrifft einen Bremsenkörper nach dem Oberbegriff des Patentanspruches 1.

Der Bremsenkörper dieser Art gemäß der DE 43 21 930 A1 besitzt eine Zahnscheibe aus einzelnen Zähnen, von der ein ABS-Sensor die Radialdrehzahlsignale abgreift und an ein Fahrwerkregelsystem weiterleitet. Die Zahnscheibe sitzt nach einem der Ausführungsbeispiele auf einem an die Bremsscheibennabe angegossenen Zahnscheibenring. Dabei laufen die Zähne auf dem Umfang des Zahnscheibenringes frei aus.

Dieses freie Auslaufen der Zähne beeinträchtigt wohl nicht ihre Funktion während des Betriebes. Es besteht jedoch ein großes Risiko während des Fertigungsprozesses in der Gießerei. Die Gußstücke werden nach dem Abgießen der Gießform entnommen und geputzt. Das geschieht in der Regel in einer Putztrommel, in der sie in eine grobe und unkoordinierte Berührung miteinander kommen. Es ist nicht ausgeschlossen, daß die vorspringenden Kanten der Zähne dabei beschädigt werden oder daß gar die Zähne teilweise abbrechen. Ein solches Teil ist für den weiteren Einsatz dann nicht mehr geeignet.

Der Erfindung liegt die Aufgabe zugrunde, Beschädigungen der frei vorspringenden Kanten der angegossenen Zähne des Bremsenkörpers zu vermeiden.

Der erfindungsgemäße Bremsenkörper besitzt die im Patentanspruch 1 genannten Merkmale.

Es wird bewußt darauf geachtet, daß frei vorstehende Kanten der Zähne gegen mögliche Beschädigungen gesichert sind. Das erfolgt entweder durch einen die Zähne begrenzenden, umlaufenden Bund auf dem Zahnscheibenring oder durch eine Abschrägung zum Brechen der frei vorstehenden Kanten. Ein Bund sollte zumindest am leicht zugänglichen, freien Innenkranz des Zahnscheibenringes angeordnet sein, da hier Kollisionen mit anderen Gußstücken in der Putztrommel am ehesten auftreten können. Das Brechen der frei vorstehenden Kanten der Zähne kann umlaufend erfolgen, sofern die für das Abgreifen benötigte Länge der Zähne erhalten bleibt.

Ein Bund sollte die volle Höhe der Zähne besitzen, und zwar sowohl im unbearbeiteten als auch im bearbeiteten Zustand. Die Zähne sind dadurch im Rohzustand während des Putzens geschützt. Beim Bearbeiten wird der Bearbeitungszuschlag auf den Zähnen und auf dem Bund in einem einzigen Bearbeitungsvorgang entfernt.

Ein Brechen der frei vorstehenden Kanten der Zähne ist insbesondere dann zu empfehlen, wenn die Zähne für eine radiale Sensierung in Form eines Zahnkranzes unmittelbar auf dem Umfang der Nabe angegossen sind. In diesem Fall ist kein separater Zahnring auf die Nabe aufzuschrumpfen, wie es bisher üblich ist. Es entfällt jeder Mehraufwand in der Fertigung und in der Logistik. Auch eine Schwächung der gußeisernen Nabe wird vermieden, so daß keine Festigkeitsprobleme auftreten. Würden dabei die Zähne wie den bisher aufzuschrumpfenden Zahnringen mit ihren Kanten frei vorstehen, dann wären die genannten Probleme in der Putzerei mit möglichen Beschädigungen der Zähne vorhanden. Das wird durch das bewußte Brechen der frei vorstehenden Kanten vermieden.

Sofern sich die Zähne bei dieser Ausführung in Längsrichtung der Nabe um die benötigte Formschräge verbreitern, können sie in einer Gießform frei ausgeformt werden, da die Gießform unter exakter Ausformung der Ballen zwischen den Zähnen einwandfrei vom Modell abgehoben werden kann. In diesem Fall sind die frei vorstehenden Kanten der Zähne entsprechend der erfindungsgemäßen Alternative zu brechen.

Sollte man bei der Fertigung von einem in die Gießform einzufügenden Kern Gebrauch machen, dann sind beide Ausführungen möglich. Durch den Kern kann sowohl ein umlaufender Bund zum Schutz der Kanten der Zähne als auch eine entsprechende Brechung der Zähne ausgeformt werden.

Die Zeichnung stellt Ausführungsbeispiele der Erfindung dar. Es zeigt:
Fig. 1 bis Fig. 3: Den Bremsenkörper im Rohzustand, und zwar
- Fig. 1:: Einen Teilquerschnitt,
- Fig. 2:: Die Ansicht V aus Fig. 1,
- Fig. 3:: Den Schnitt C-C aus Fig. 2 im Maßstab 5:1,
Fig. 4 bis Fig. 6: Den Bremsenkörper im bearbeiteten Zustand, und zwar

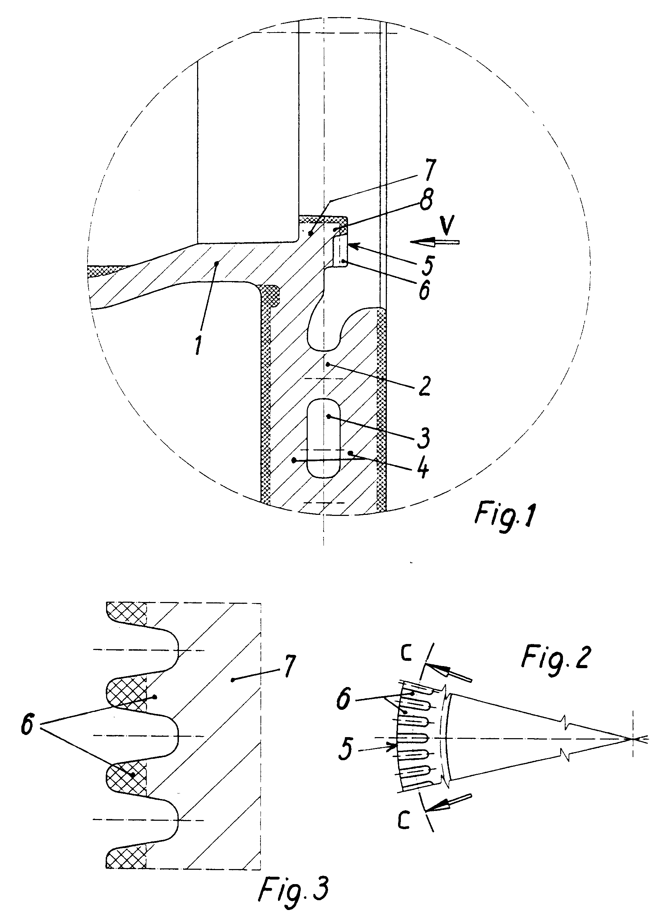

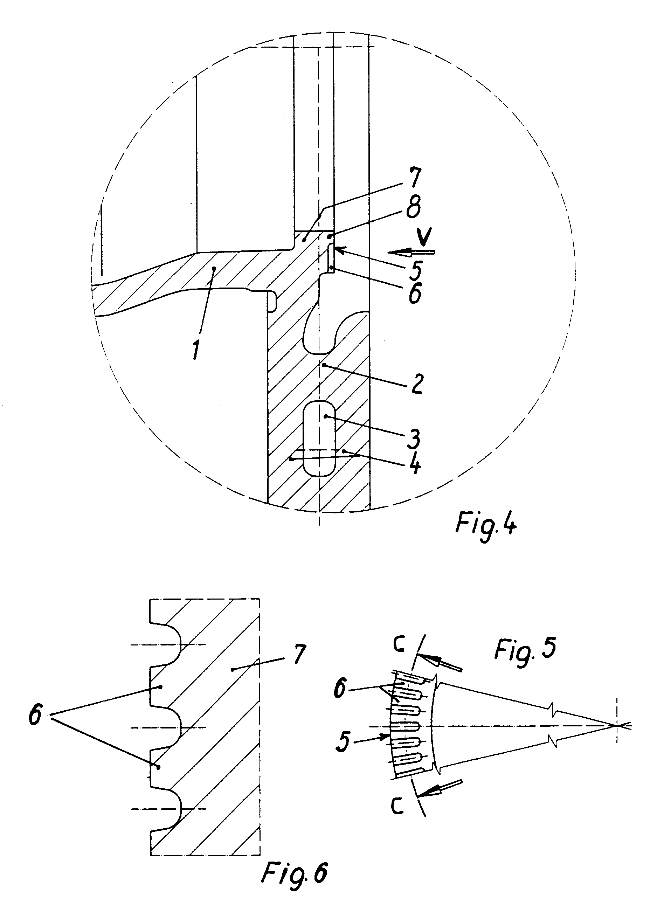

- Fig. 4:: Den Teilquerschnitt gemäß Fig. 1,
- Fig. 5:: Die Ansicht gemäß Fig. 2 und

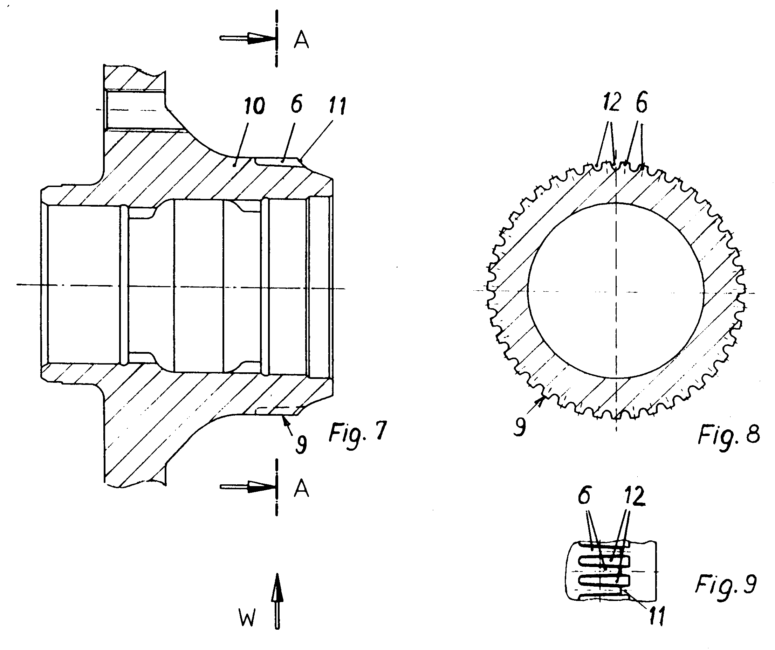

- Fig. 6:: Den Schnitt gemäß Fig. 3,
- Fig. 7:: Einen Schnitt durch die Nabenpartie eines Bremsenkörpers,
- Fig. 8:: Den Schnitt A-A aus Fig. 7 und
- Fig. 9:: Die Ansicht W aus Fig. 7.

Der Bremsenkörper nach Fig. 1-6 besitzt einen Nabentopf 1 mit zwei angegossenen, durch Stege 2 verbundenen und durch einen Lüftungsschlitz 3 belüfteten Reibringen 4. An die Bremsscheibennabe 1 ist ein die Zahnscheibe 5 aus einzelnen Zähnen 6 tragender Zahnscheibenring 7 angegossen. Am Innenkranz besitzt der Zahnscheibenring 7 einen umlaufenden, die Zähne 6 begrenzenden Bund 8. Dieser besitzt sowohl im unbearbeiteten als auch im bearbeiteten Zustand die Höhe der Zähne 6. Er schützt diese gegen Beschädigungen. Durch ein freies Auslaufen der Zähne 6 auf der Gegenseite wird eine Reinigung der Vertiefungen erleichtert.

Bei einem Bremsenkörper nach Fig. 7-9 sind die Zähne 6 auf einem umlaufenden Zahnkranz 9 auf dem Umfang einer Nabe 10 angeordnet. Dabei besitzen die frei vorstehenden Kanten der Zähne 6 eine diese Kanten brechende Abschrägung 11, wodurch die Beschädigungen verhindert werden. Für das Ausformen in der Gießform verbreitern sich die Zähne 6 in Längsrichtung der Nabe 10 um die benötigte Formschräge. Die Zwischenräume 12 sind in der Gießform durch Ballen frei auszuformen.

## Patentansprüche

1. Bremsenkörper für Kraftfahrzeugbremsen mit unmittelbar an ihm angegossenen Zähnen (6) für einen die Radialdrehzahl ermittelnden und an ein Fahrwerkleitsystem weiterleitenden ABS-Sensor,
dadurch gekennzeichnet, daß die frei vorspringenden Kanten der Zähne (6) durch einen umlaufenden, die Zähne (6) miteinander verbindenden Bund (8) oder durch diese Kanten brechende Abschrägungen (11) gegen Beschädigungen gesichert sind.

2. Bremsenkörper nach Anpruch 1,
dadurch gekennzeichnet, daß die Zahne (6) für eine radiale Sensierung in Form eines Zahnkranzes (9) unmittelbar auf dem Umfang der Nabe (10) angegossen sind und sich in Längsrichtung der Nabe (10) um die benötigte Formschräge verbreitern und in einer Gießform grün auszuformen sind und daß sie an ihren frei vorstehenden Kanten mit den diese Kanten brechenden Abschrägungen (11) versehen sind.

3. Bremsenkörper nach Anspruch 1,
dadurch gekennzeichnet, daß die Zähne (6) in einer Gießform durch einen einzufügenden Kern auszuformen sind und daß sie an ihren frei vorstehenden Kanten in den umlaufenden Bund übergehen oder mit den Abschrägungen versehen sind.

4. Bremsenkörper nach Anspruch 1,
dadurch gekennzeichnet, daß der Bund (8) sowohl im umbearbeiteten als auch im bearbeiteten Zustand die Höhe der Zähne (6) besitzt.
